# EUROPEAN PATENT APPLICATION

(11) **EP 1 445 920 A2**
(43) Date of publication of application: **11.08.2004**
(21) Application number: 04001834.3
(22) Date of filing: 28.01.2004
(51) Int. Cl.: H04M 1/02, H04M 1/725, H04N 7/14

(54) **Portable electronic device, display direction switching method, and recording medium**

(30) Priority: 07.02.2003 JP 2003031401
(71) Applicant: NEC CORPORATION, Tokyo (JP)
(72) Inventor: Takahashi, Akira, Tokyo (JP)
(74) Representative: Baronetzky, Klaus, Dipl.-Ing.

(57) **Abstract**

A portable electronic device includes a display, rotation detection unit, and coordinate rotation/transformation module. The display displays an image in a predetermined display direction. The rotation detection unit detects the displacement of a housing which stores the display, from a predetermined posture position by rotation. When the current posture position of the housing obtained from the rotation displacement detected by the rotation detection unit is the first posture position rotated through a predetermined angle from the predetermined posture position in a predetermined direction, the coordinate rotation/transformation module rotates the image so as to display it in the first display direction rotated through 90° from the predetermined display direction in the predetermined direction. A display direction switching method and recording medium are also disclosed.

## Description

### Background of the Invention

The present invention relates to a portable electronic device such as a cell phone or portable information terminal (PDA: Personal Digital Assistance) and a method of switching the display direction of the screen.

Recently, cell phones and PDAs which can load and play back image data such as a still image and moving image are commercially available. For example, some cell phones incorporate a mailer or browser which receives image data via the Internet and plays it back. Some cell phones are equipped with a camera function capable of displaying a photographed image. Such portable electronic device requires a large-screen-size display so as to be able to display an image on a larger screen.

The housing size of a portable electronic device is limited for good portability, and the screen size must be enlarged in consideration of the device shape. For example, a cell phone has a portrait shape so as to allow the user to easily hold the cell phone. The use of the portrait screen in accordance with the housing shape enlarges the screen size. To enlarge the screen size of a portable electronic device, a portrait or landscape screen is generally adopted in accordance with the shape of the device main body.

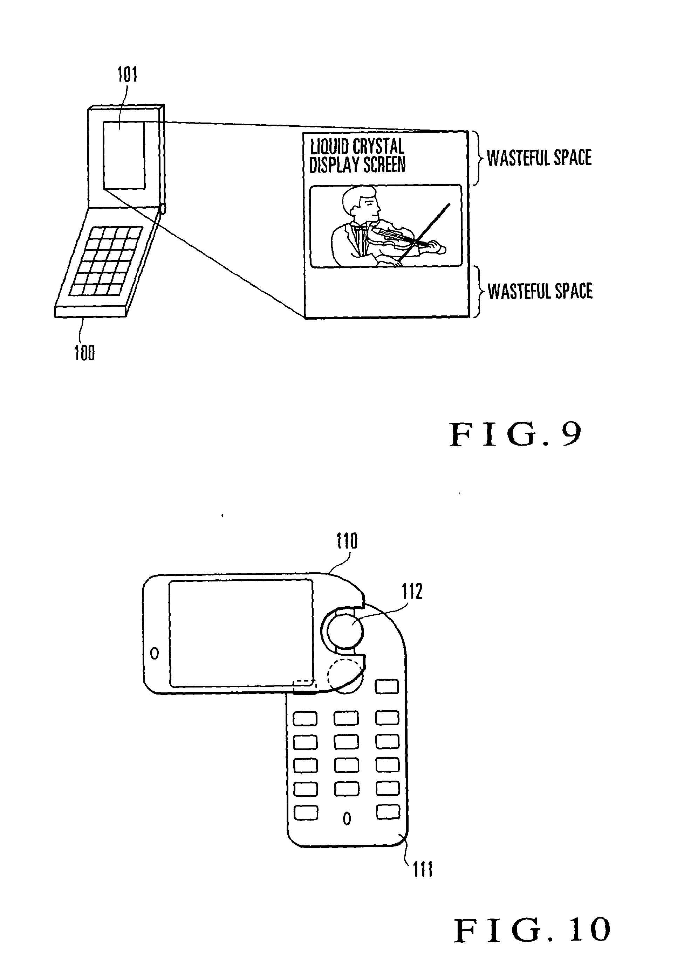

For example, on a portrait screen, the size of a landscape image is regulated by the screen width upon display, and the image is not displayed using the entire screen. For example, when a landscape image is displayed on a portrait liquid crystal screen 101 of a cell phone 100, as shown in Fig. 9, regions where no image is display are produced at the upper and lower portions of the liquid crystal screen 101. A similar problem occurs when a portrait image is displayed on a landscape screen.

This problem can be solved by performing image processing of rotating an image through 90° on the screen and thereby displaying a landscape image on the entire portrait screen. Switching of the display direction by image rotation is generally executed when the user performs input operation by key press on the cell phone.

A device which switches the display direction by an operation other than key press is a portable electronic device as disclosed in reference 1 (Japanese Patent Laid-Open No. 2002-135380). As shown in Fig. 10, this portable electronic device comprises two housings 110 and 111 coupled by a hinge 112. The display is switched by setting an angle defined by the housings 110 and 111 to a predetermined angle (about 90°).

To switch the display direction by key press, keys must be pressed several times, and the operation is bothersome and inconvenient. Especially for a cell phone, its keys are small, and switching of the display direction by display switching key operation is very cumbersome for the user.

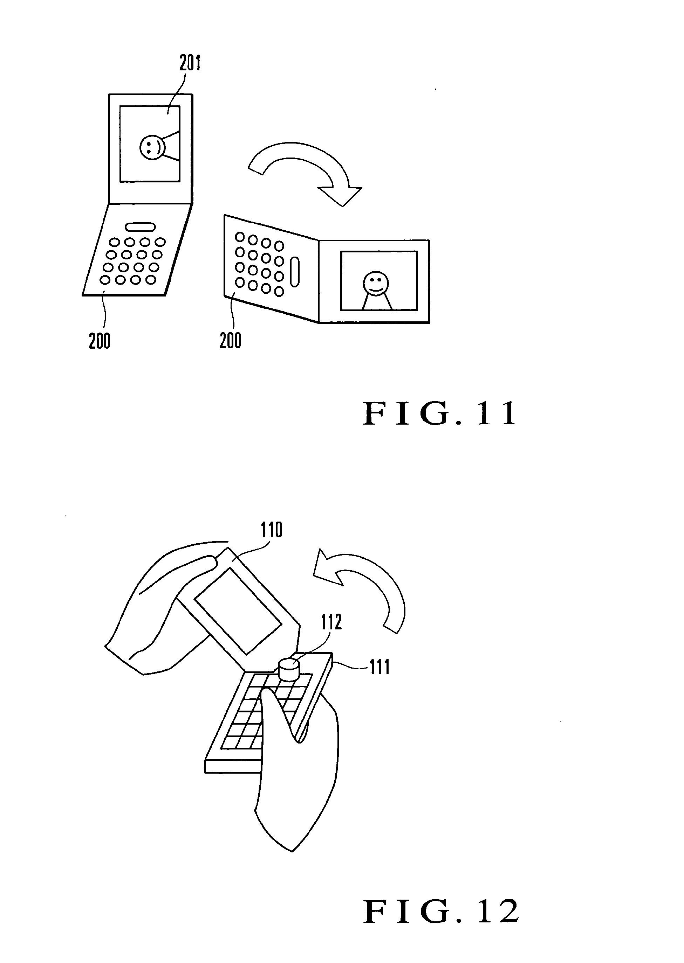

To switch the display direction and display a landscape image on a portrait screen, for example, a cell phone 200 is rotated clockwise so as to laterally orient a portrait screen 201, as shown in Fig. 11. When the user uses the cell phone in his/her right hand, he/she can easily rotate the cell phone clockwise, as shown in Fig. 11. When the user uses the cell phone in his/her left hand, he/she must inconveniently hold the cell phone in the other hand and rotate it. The cell phone is desirably rotated clockwise in use in the right hand and counterclockwise in use in the left hand. Conventionally, the rotational direction of an image in switching the display direction is one direction. Rotation cannot be switched between the clockwise direction and the counterclockwise direction.

In the portable electronic device described in reference 1, the angle between the housings 110 and 111 must be set with both hands in switching the display direction, as shown in Fig. 12. This operation is difficult when the user has a baggage (e.g., bag) in one hand.

### Summary of the Invention

It is, therefore, a principal object of the present invention to provide a portable electronic device and display direction switching method capable of switching the display direction while allowing the user to hold the portable electronic device in one hand, without any key press or input operation with both hands, and a recording medium.

It is another object of the present invention to provide a portable electronic device and display direction switching method capable of switching the rotational direction of an image in accordance with clockwise or counterclockwise rotation of a housing in switching the display direction, and a recording medium.

To achieve the above objects, according to the present invention, there is provided a portable electronic device comprising display means for displaying an image in a predetermined display direction, rotation detection means for detecting a displacement of a housing which stores the display means, from a predetermined posture position by rotation, and coordinate rotation/transformation means for, when a current posture position of the housing obtained from the rotation displacement detected by the rotation detection means is a first posture position rotated through a predetermined angle from the predetermined posture position in a predetermined direction, rotating the image so as to display the image in a first display direction rotated through 90° from the predetermined display direction in the predetermined direction.

Also, there is provided a portable electronic device comprising display means for displaying an image in a predetermined display direction, image size determination means for determining, on the basis of a detection result obtained from a video stream supplied as the image, which of two display directions including the predetermined display direction of video and a first display direction rotated through 90° from the predetermined display direction in a predetermined direction increases a display area on a screen, and coordinate rotation/transformation means for rotating the image so as to display the video in the first display direction when determination by the image size determination means represents the first display direction.

### Brief Description of the Drawings

Fig. 1 is a block diagram showing the schematic arrangement of a cell phone as an example of a portable electronic device according to the first embodiment of the present invention;
Fig. 2 is a schematic view for explaining posture position detection in the cell phone shown in Fig. 1;
Figs. 3A and 3B are views for explaining coordinate transformation in the cell phone shown in Fig. 1;
Figs. 4A, 4B, and 4C are schematic views showing an example of coordinate transformation in the cell phone shown in Fig. 1;
Fig. 5 is a flow chart for explaining display direction switching operation in the cell phone shown in Fig. 1;
Fig. 6 is a perspective view schematically showing the screen display of the cell phone shown in Fig. 1;
Fig. 7 is a block diagram showing the schematic arrangement of a cell phone as an example of a portable electronic device according to the second embodiment of the present invention;
Fig. 8 is a block diagram showing the schematic arrangement of a cell phone as an example of a portable electronic device according to the third embodiment of the present invention;
Fig. 9 is a schematic view showing a display example of an image on a conventional cell phone;
Fig. 10 is a schematic view showing the schematic arrangement of a portable electronic device described in reference 1;
Fig. 11 is a schematic view showing an example of the use form of a conventional cell phone capable of switching the display direction;
Fig. 12 is a perspective view for explaining the use form of the cell phone shown in Fig. 10; and
Fig. 13 is a block diagram showing the schematic arrangement of a cell phone as an example of a portable electronic device according to still another embodiment of the present invention.

### Description of the Preferred Embodiments

Preferred embodiments of the present invention will be described in detail below with reference to the accompanying drawings.

### (First Embodiment)

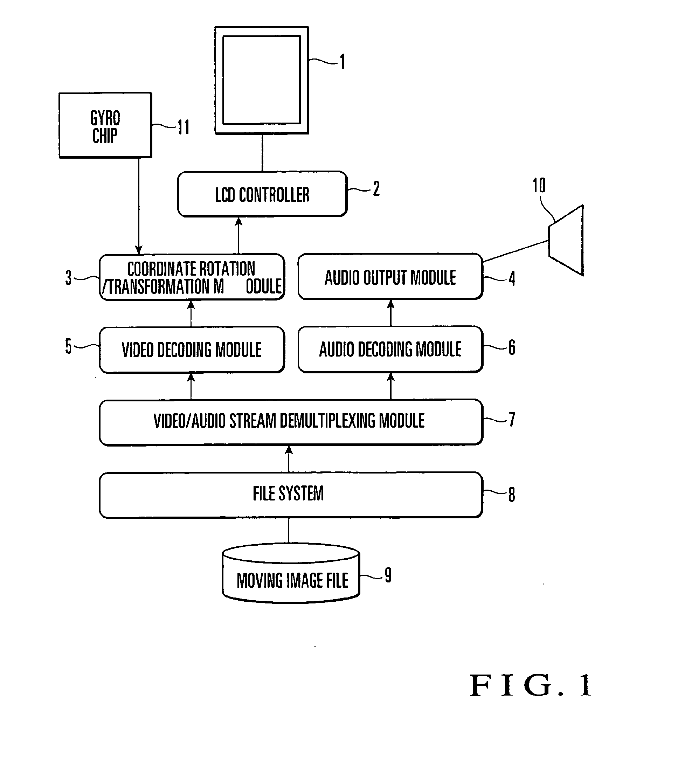

Fig. 1 shows the schematic arrangement of a cell phone as the first embodiment of a portable electronic device according to the present invention. In Fig. 1, rectangular portions with rounded corners are functional blocks, and can be basically implemented by software. Portions other than the functional blocks are hardware. Fig. 1 shows only characteristic features of a cell phone, and does not show its generally known functional portions such as a communication function.

The cell phone according to the first embodiment comprises a liquid crystal display (to be referred to as an LCD hereinafter) 1, LCD controller 2, coordinate rotation/transformation module 3, audio output module 4, video decoding module 5, audio decoding module 6, video/audio stream demultiplexing module 7, file system 8, moving image file 9, loudspeaker 10, and gyro chip 11.

The LCD 1 is an existing display having a portrait screen. The moving image file 9 is a file which stores moving image contents data. The moving image contents data may be data received via a network (e.g., Internet). The file system 8 has a function of opening the moving image file 9 in which video data and audio data are multiplexed and stored, and reading out the contents of the moving image file 9. The video/audio stream demultiplexing module 7 has a function of demultiplexing and extracting a video stream and audio stream from a file (e.g., MP4) in which video data and audio data are multiplexed and stored, transferring the video stream to the video decoding module 5, and transferring the audio stream to the audio decoding module 6.

The video decoding module 5 has a function of decoding video stream data transferred from the video/audio stream demultiplexing module 7, and a function of transferring the decoded video frame data to the coordinate rotation/transformation module 3 at a time interval designated in content creation. The audio decoding module 6 has a function of decoding audio stream data transferred from the video/audio stream demultiplexing module 7, and a function of transferring the decoded audio data to the audio output module 4. The audio output module 4 has a function of converting data transferred from the audio decoding module into an analog electrical signal and outputting it from the loudspeaker 10. The LCD controller 2 has a function of driving and controlling the LCD 1 in accordance with video frame data input from the coordinate rotation/transformation module 3.

The gyro chip 11 is a means (rotation detection means) for detecting the displacement of the cell phone housing which stores each portion shown in Fig. 1, from a predetermined posture position by rotation. The gyro chip 11 detects an acceleration applied to the housing, and supplies the detection result to the coordinate rotation/transformation module 3. For example, when the housing is rotated clockwise through about 90°, as shown in Fig. 11, an output from the gyro chip 11 also changes along with rotation. The magnitude of a change in an output from the gyro chip 11 corresponds to the rotation amount of the housing. The predetermined posture position of the housing, i.e., a normal posture position of the housing when the user holds the cell phone in his/her hand and sees a portrait screen is defined as a reference. The sign of an output from the gyro chip 11 is changed between a case wherein the housing rotates clockwise and a case wherein the housing rotates counterclockwise from this reference position. Hence, a rotation position from the predetermined posture position of the cell phone can be detected from an output from the gyro chip 11. The gyro chip 11 is mounted adjacent to the LCD 1 within the housing. This arrangement allows more reliably detecting the screen orientation of the LCD 1 upon rotating the cell phone. As the gyro chip 11, an existing chip constituted by combining a ceramic gyro, acceleration sensor, and the like can be used.

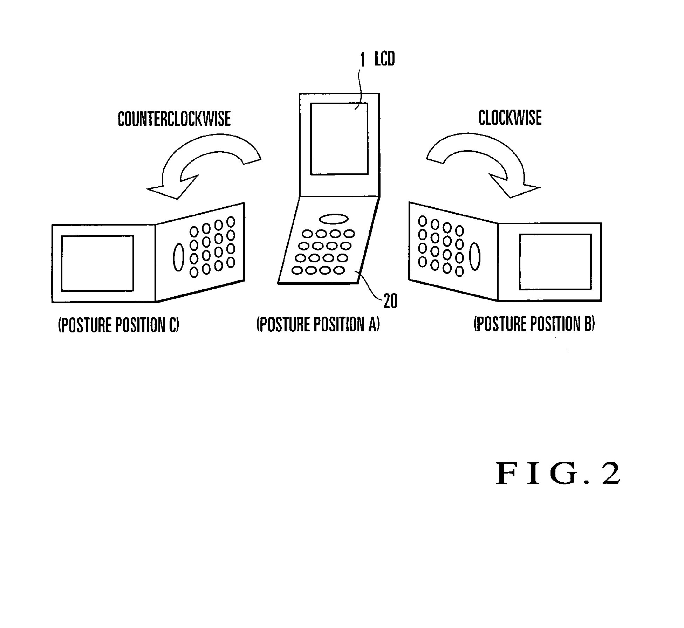

Fig. 2 schematically shows the outer appearance of the cell phone shown in Fig. 1. The cell phone shown in Fig. 2 is a so-called foldable cell phone. A housing 20 is formed by an upper portion having the LCD 1 which constitutes a display means, and a lower portion having buttons and keys. The upper and lower portions of the housing 20 are so attached as to be swingable and foldable.

In the cell phone, the coordinate rotation/transformation module 3 stored in, e.g., the lower portion of the housing 20 determines the orientation of the current screen (display) on the basis of acceleration data input from the gyro chip 11. In screen orientation determination, as shown in Fig. 2, a screen orientation when the housing 20 is located at a posture position A (reference posture position), a screen orientation at a posture position B when the housing 20 is rotated clockwise through about 90° from the posture position A, and a screen orientation at a posture position C when the housing 20 is rotated counterclockwise through about 90° from the posture position A are determined. The coordinate rotation/transformation module 3 performs coordinate transformation (rotation) of video frame data input from the video decoding module 5 in accordance with the determined screen orientation.

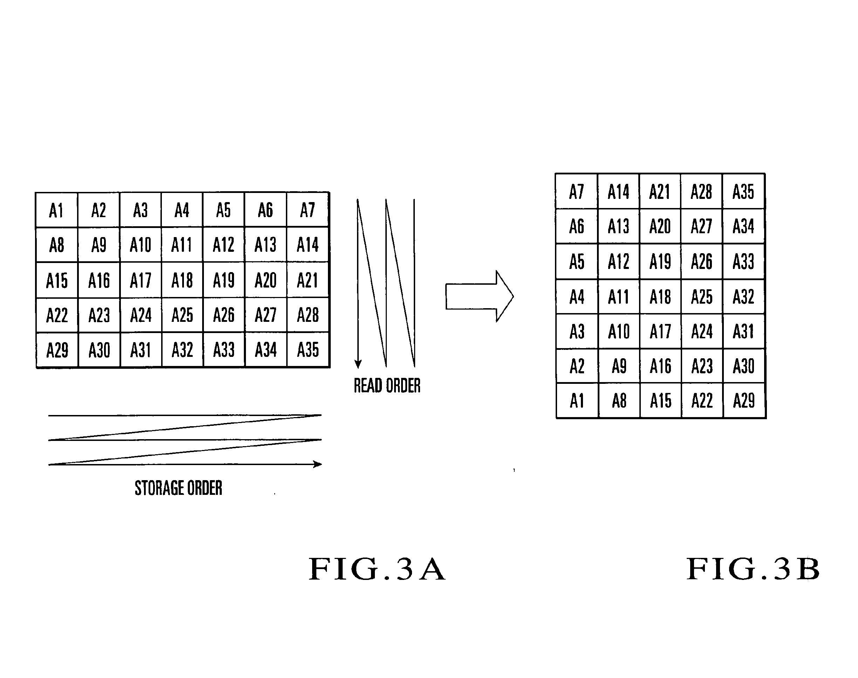

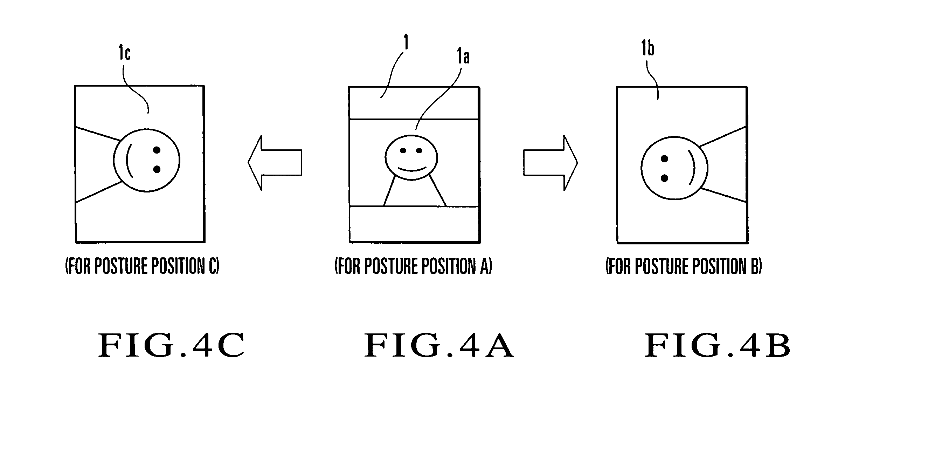

As an example of coordinate transformation by the coordinate rotation/transformation module 3, Figs. 3A and 3B show an example of rotating through 90° image data of one frame decoded in a coordinate system having an origin at an upper left point. As shown in Fig. 3A, the coordinate rotation/transformation module 3 sequentially stores, in a frame buffer, landscape image data of pixels A1 to A35 in the row direction from an upper left pixel to a lower right pixel in an order of the pixels A1, A2,..., A35. The coordinate rotation/transformation module 3 then sequentially reads out the stored data in the column direction from an upper right pixel to a lower left pixel. In data read by the coordinate rotation/transformation module 3, read starts from the rightmost column "A7, A14, A21, A28, A35", and the leftmost column "A1, A8, A15, A22, A29" is finally read out. The image data read out in the column direction is supplied to the LCD controller 2 and displayed on the LCD 1. The screen provides an image obtained by rotating the original image (Fig. 3A) counterclockwise through 90°, as shown in Fig. 3B. In this case, the right end of a display image 1a serving as an original image shown in Fig. 4A is located at the upper end of the screen, resulting in a display image 1b as shown in Fig. 4B. When the image data shown in Fig. 3A is sequentially read out in the column direction from an upper left pixel to a lower right pixel, the original image can be rotated clockwise through 90°. In this case, the left end of the display image 1a serving as an original image shown in Fig. 4A is located at the upper end of the screen, resulting in a display image 1c as shown in Fig. 4C.

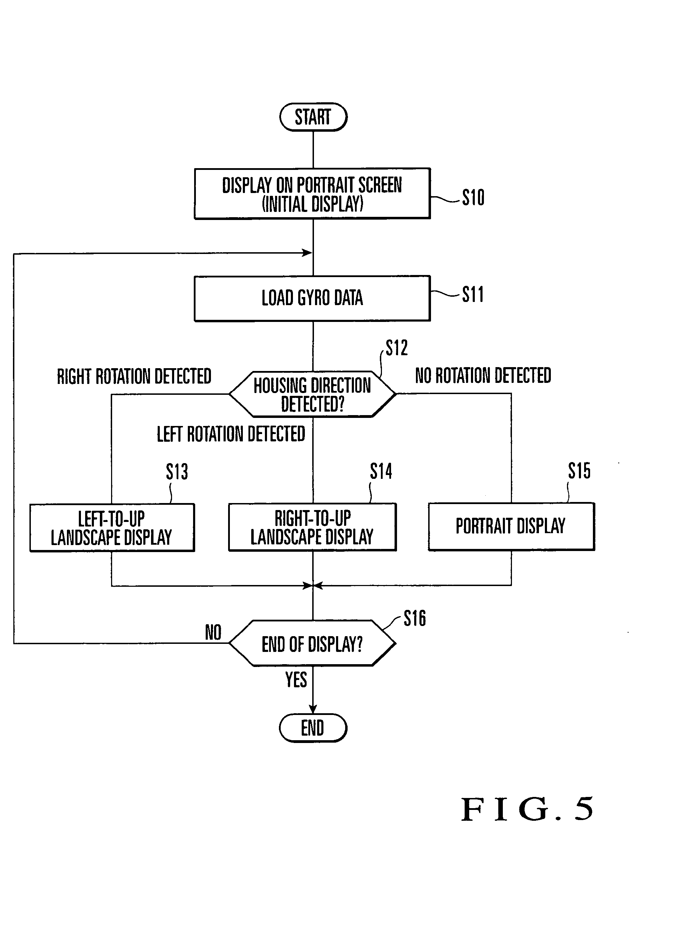

Screen display direction switching operation in the cell phone according to the first embodiment will be explained with reference to Fig. 5. The following screen display direction switching operation is executed when the user performs, on the cell phone, predetermined input operation of displaying image data.

In an initial state, the screen display direction is a portrait direction (portrait display) (step S10). When the user rotates the cell phone housing in a desired direction, the gyro chip 11 which has detected this state supplies acceleration data corresponding to rotation of the housing to the coordinate rotation/transformation module 3 (step S11). The coordinate rotation/transformation module 3 detects rotation of the housing on the basis of the displacement value of the acceleration data supplied from the gyro chip 11 (step S12). If the coordinate rotation/transformation module 3 detects that the housing has been rotated clockwise through 90° or an angle sufficiently approximate to 90°, the coordinate rotation/transformation module 3 performs coordinate transformation so as to locate the left side of the image data to the upper portion of the screen, and performs left-to-up landscape display (transformation from Fig. 4A to Fig. 4C) (step S13). If the coordinate rotation/transformation module 3 detects that the housing has been rotated counterclockwise through 90° or an angle sufficiently approximate to 90°, the coordinate rotation/transformation module 3 performs coordinate transformation so as to locate the right side of the image data to the upper portion of the screen, and performs right-to-up landscape display (transformation from Fig. 4A to Fig. 4B) (step S13). When the housing has been rotated clockwise through 90° or an angle sufficiently approximate to 90°, the coordinate rotation/transformation module 3 performs coordinate transformation so as to locate the right side of the image data to the upper portion of the screen, and performs landscape display (step S14). If neither rotation has been detected or no rotation through a sufficient angle with reference to 90° has been detected, the initial portrait display is maintained (step S15).

Processing in steps S11 to S15 is repetitively executed until display of image data in step S16 ends. To display new image data, the user performs, on the cell phone, predetermined input operation of displaying new image data, thereby executing screen display direction switching operation.

The above-described screen display direction switching operation allows the user to perform portrait/landscape switching of the display direction of an image on the screen by only rotating the cell phone housing in an arbitrary direction while holding the cell phone in one hand, without any special operation such as key press. More specifically, the user can perform portrait/landscape switching of the display direction of the screen by only rotating the cell phone so as to laterally orient the LCD 1 of the portrait screen. A display image upon switching the display direction is displayed in the entire portrait screen, and can be viewed in a larger screen.

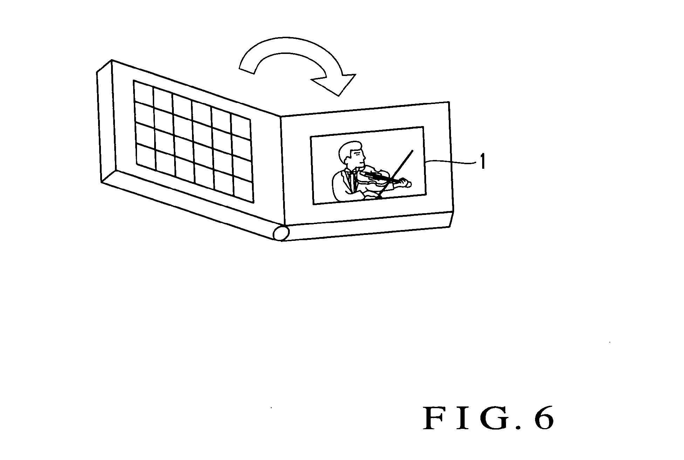

Switching between left-to-up landscape display and right-to-up landscape display is automatically done in accordance with the rotational direction of the housing. For example, when the cell phone is held in the right hand, it is rotated clockwise to perform portrait/landscape switching of the display direction, as shown in Figs. 6 and 11. When the cell phone is held in the left hand, it is rotated counterclockwise to perform portrait/landscape switching of the display direction.

### (Second Embodiment)

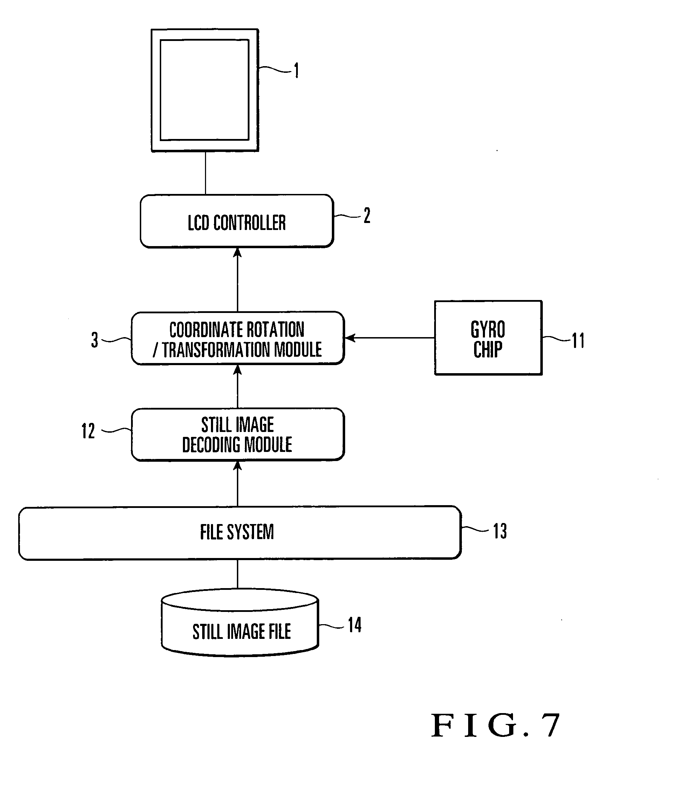

Fig. 7 shows the schematic arrangement of a cell phone as the second embodiment of the portable electronic device according to the present invention. In Fig. 7, rectangular portions with rounded corners are functional blocks, and can be basically implemented by software. Portions other than the functional blocks are hardware. Fig. 7 shows only characteristic features of a cell phone, and does not show its generally known functional portions such as a communication function.

The cell phone according to the second embodiment displays a still image, and comprises an LCD 1, LCD controller 2, coordinate rotation/transformation module 3, still image decoding module 12, file system 13, and still image file 14. The cell phone is basically the same as that of the first embodiment except that image data to be processed is a still image.

The file system 13 reads out the still image file 14, and transfers it to the still image decoding module 12. The still image decoding module 12 transfers, to the coordinate rotation/transformation module 3, image data obtained by decoding the still image file 14 supplied from the file system 13. The coordinate rotation/transformation module 3 detects a change in the posture position of the housing, i.e., changes in posture positions A to C shown in Fig. 2 on the basis of acceleration data supplied from a gyro chip 11, and determines the current screen orientation. If necessary, the coordinate rotation/transformation module 3 performs coordinate transformation corresponding to the screen orientation for image data supplied from the still image decoding module 12. This coordinate transformation is the same as that in the first embodiment. The LCD controller 2 displays image data supplied from the coordinate rotation/transformation module 3 on the LCD 1.

Also in the cell phone according to the second embodiment, the user can perform portrait/landscape switching of the display direction of an image on the screen by rotating the housing in an arbitrary direction while holding the cell phone in one hand, without any special operation such as key press.

Switching between left-to-up landscape display and right-to-up landscape display is automatically done in accordance with the rotational direction of the housing. For example, when the cell phone is held in the right hand, it is rotated clockwise to perform portrait/landscape switching of the display direction, as shown in Figs. 6 and 11. When the cell phone is held in the left hand, it is rotated counterclockwise to perform portrait/landscape switching of the display direction.

### (Third Embodiment)

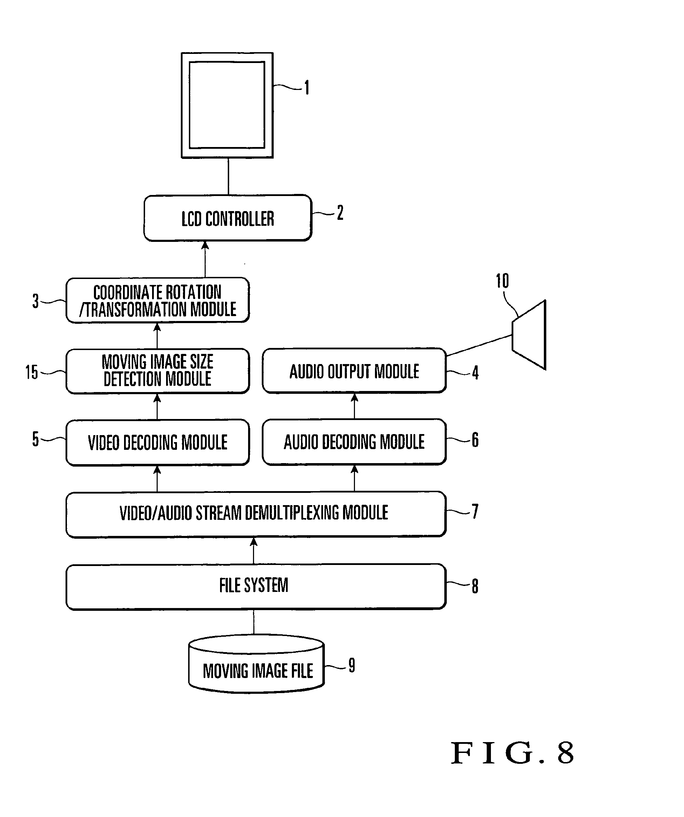

Fig. 8 shows the schematic arrangement of a cell phone as the third embodiment of the portable electronic device according to the present invention. The cell phone basically has the same arrangement as that shown in Fig. 1 except that a moving image size detection module 15 replaces a gyro chip 11. Only the operations of characteristic features will be explained, and a description of the repetitive portions will be omitted.

The moving image size detection module 15 detects the aspect ratio of video from a video stream supplied from a video decoding module 5. Based on the aspect ratio detected from the video, the moving image size detection module 15 determines which of playback in a normal display direction (portrait direction) without any coordinate transformation and display (rotational display) upon rotation in a predetermined direction (either clockwise or counterclockwise direction) by coordinate transformation increases the moving image display area on the screen of an LCD 1. The moving image size detection module 15 supplies the determination result together with the video stream to a coordinate rotation/transformation module 3.

When the coordinate rotation/transformation module 3 receives from the moving image size detection module 15 a determination result that the moving image display area increases in the normal display direction, the coordinate rotation/transformation module 3 does not execute any coordinate transformation, and sends the video stream supplied from the moving image size detection module 15 to an LCD controller 2 without any change. When the coordinate rotation/transformation module 3 receives from the moving image size detection module 15 a determination result that the moving image display area increases upon rotational display, the coordinate rotation/transformation module 3 executes coordinate transformation of rotating a video stream in a predetermined direction (either clockwise or counterclockwise direction) for video stream supplied from the moving image size detection module 15. After that, the coordinate rotation/transformation module 3 sends the video stream to the LCD controller 2. This coordinate transformation is the same as that in the first embodiment.

To perform rotational display, a pop-up message to display a moving image in the landscape direction may be displayed on part of the screen to the user before an image is displayed on the screen of the LCD 1. The user can grasp the display direction before image display.

Also in the cell phone according to the third embodiment, the user can perform portrait/landscape switching of the display direction of an image on the screen while holding the cell phone in one hand, without any special operation such as key press.

The cell phone according to each embodiment described above is merely an example of the present invention, and the arrangement of the cell phone to which the present invention is applicable can be properly changed without departing from the gist of the present invention. For example, the first and second embodiments may be combined. This combination can provide a device capable of playing back both moving and still images.

With a combination of the first and third embodiments, when the moving image display area is determined to increase in rotational display, a pop-up message to this effect can be displayed on part of the screen. The user rotates the housing clockwise or counterclockwise in response to the message, switching the display direction.

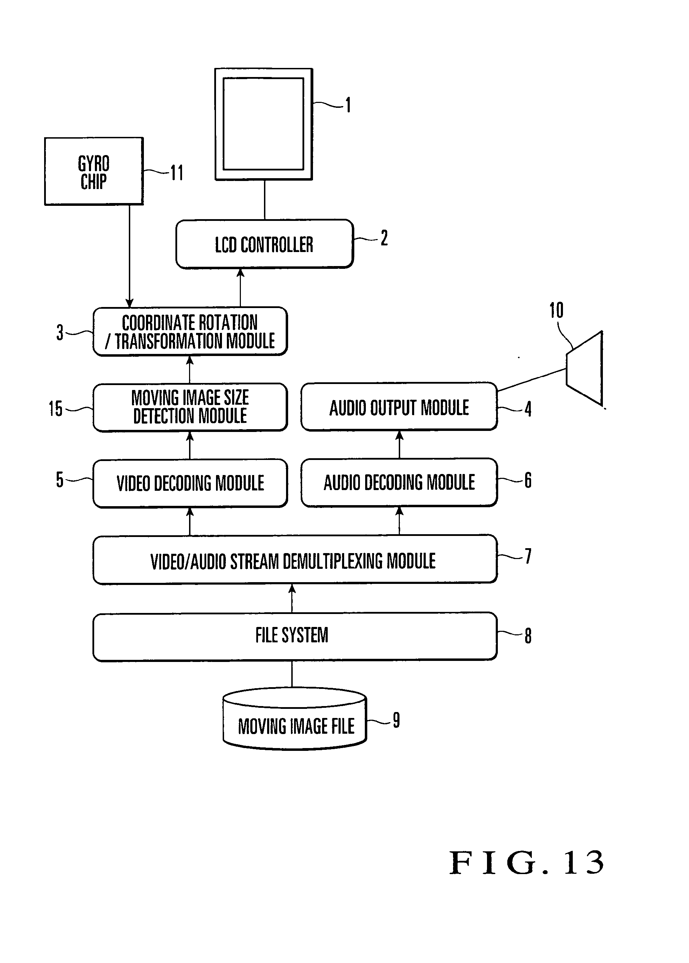

As the combination of the first and third embodiments, the cell phone suffices to be constituted as shown in Fig. 13. The cell phone shown in Fig. 13 comprises an LCD 1, LCD controller 2, coordinate rotation/transformation module 3, audio output module 4, video decoding module 5, audio decoding module 6, video/audio stream demultiplexing module 7, file system 8, moving image file 9, loudspeaker 10, gyro chip 11, and moving image size detection module 15.

The LCD 1 is an existing display having a portrait screen. The moving image file 9 is a file which stores moving image contents data. The moving image contents data may be data received via a network (e.g., Internet). The file system 8 has a function of opening the moving image file 9 in which video data and audio data are multiplexed and stored, and reading out the contents of the moving image file 9. The video/audio stream demultiplexing module 7 has a function of demultiplexing and extracting a video stream and audio stream from a file (e.g., MP4) in which video data and audio data are multiplexed and stored, transferring the video stream to the video decoding module 5, and transferring the audio stream to the audio decoding module 6.

The video decoding module 5 has a function of decoding video stream data transferred from the video/audio stream demultiplexing module 7, and a function of transferring the decoded video frame data to the coordinate rotation/transformation module 3 at a time interval designated in content creation. The audio decoding module 6 has a function of decoding audio stream data transferred from the video/audio stream demultiplexing module 7, and a function of transferring the decoded audio data to the audio output module 4. The audio output module 4 has a function of converting data transferred from the audio decoding module into an analog electrical signal and outputting it from the loudspeaker 10. The LCD controller 2 has a function of driving and controlling the LCD 1 in accordance with video frame data input from the coordinate rotation/transformation module 3.

The gyro chip 11 is a means (rotation detection means) for detecting the displacement of the cell phone housing which stores each portion shown in Fig. 1, from a predetermined posture position by rotation. The gyro chip 11 detects an acceleration applied to the housing, and supplies the detection result to the coordinate rotation/transformation module 3.

The moving image size detection module 15 detects the aspect ratio of video from a video stream supplied from the video decoding module 5. Based on the detected aspect ratio, the moving image size detection module 15 determines which of playback in a normal display direction (portrait direction) without any coordinate transformation and display (rotational display) upon rotation in a predetermined direction (either clockwise or counterclockwise direction) by coordinate transformation increases the moving image display area on the screen of the LCD 1. The moving image size detection module 15 supplies the determination result together with the video stream to the coordinate rotation/transformation module 3.

In the cell phone shown in Fig. 13, when the gyro chip 11 serving as a rotation detection means detects rotation of the cell phone housing, an operation by the image size detection module 15 serving as an image size determination means can also be limited. Similarly, when the image size detection module operates, an operation by the gyro chip may be limited. Such control is done by, e.g., the coordinate rotation/transformation module 3.

The display device is an LCD in each embodiment, but a display device such as an organic EL can also be adopted instead of the LCD. The display device can display pieces of information such as characters in addition to images.

The cell phone described in each embodiment is basically formed by a computer device having a computer (CPU) and memory. The computer executes a program installed in the memory in advance, thereby performing a series of processes in the functional blocks. Examples of the memory which stores a program are a recording medium such as a CD-ROM, and a semiconductor memory.

As has been described above, according to the present invention, the display direction is automatically switched by rotating the housing in an arbitrary direction while the portable electronic device is held in one hand, or in accordance with the aspect ratio of an image, without any input operation by key press or input operation with both hands. The portable electronic device becomes more convenient, compared to a conventional one.

## Claims

1. A portable electronic device **characterized by** comprising:
display means (1) for displaying an image in a predetermined display direction;
rotation detection means (11) for detecting a displacement of a housing (20) which stores said display means, from a predetermined posture position by rotation; and
coordinate rotation/transformation means (3) for, when a current posture position of the housing obtained from the rotation displacement detected by said rotation detection means is a first posture position rotated through a predetermined angle from the predetermined posture position in a predetermined direction, rotating the image so as to display the image in a first display direction rotated through 90° from the predetermined display direction in the predetermined direction.

2. A device according to claim 1, wherein when the current posture position of the housing (20) is determined to be a second posture position rotated through a predetermined angle from the predetermined posture position in a direction opposite to the first posture position, said coordinate rotation/transformation means (3) rotates the image so as to display the image in a second display direction rotated through 90° from the predetermined display direction in the direction opposite to the first display direction.

3. A device according to claim 1, wherein said rotation detection means (11) is formed by gyro means for detecting an acceleration applied to the housing (20).

4. A device according to claim 3, wherein said gyro means (11) is arranged adjacent to said display means (1).

5. A device according to claim 1, wherein
the portable electronic device further comprises image size determination means (15) for determining, on the basis of an aspect ratio of video obtained from a video stream supplied as the image, which of two display directions including the predetermined display direction of the video and the first display direction rotated through 90° from the predetermined display direction in the predetermined direction increases a display area on a screen, and
said coordinate rotation/transformation means rotates the image so as to display the video in the first display direction when determination by said image size determination means represents the first display direction.

6. A device according to claim 1, wherein a screen of said display means has a rectangular shape long in a portrait direction.

7. A portable electronic device **characterized by** comprising:
display means (1) for displaying an image in a predetermined display direction;
image size determination means (15) for determining, on the basis of a detection result obtained from a video stream supplied as the image, which of two display directions including the predetermined display direction of video and a first display direction rotated through 90° from the predetermined display direction in a predetermined direction increases a display area on a screen; and
coordinate rotation/transformation means (3) for rotating the image so as to display the video in the first display direction when determination by said image size determination means represents the first display direction.

8. A device according to claim 7, wherein the screen of said display means has a rectangular shape long in a portrait direction.

9. A method of switching a display direction of a portable electronic device which displays an image in a predetermined display direction, **characterized by** comprising:
the first step of detecting a displacement of a housing (20) of the portable electronic device from a predetermined posture position by rotation; and
the second step of determining a current posture position of the housing on the basis of the rotation displacement detected in the first step,
the second step including the third step of rotating the image so as to display the image in a first display direction rotated through 90° from the predetermined display direction in a predetermined direction, on the basis of determination that the current posture position of the housing is a first posture position rotated through a predetermined angle from the predetermined posture position in the predetermined direction.

10. A method according to claim 9, wherein the second step further includes the fourth step of rotating the image so as to display the image in a second display direction rotated through 90° from the predetermined display direction in a direction opposite to the first display direction, on the basis of determination that the current posture position of the housing is a second posture position rotated through a predetermined angle from the predetermined posture position in a direction opposite to the first posture position.

11. A method according to claim 9, wherein the rotation displacement detected in the second step includes a change in acceleration applied to the housing.

12. A method according to claim 9, wherein
the display direction switching method further comprises
the fifth step of detecting an aspect ratio of video obtained from a video stream supplied as the image, and
the sixth step of determining, on the basis of the aspect ratio of the video detected in the fifth step, which of the predetermined display direction of the video and the first display direction rotated through 90° from the predetermined display direction in the predetermined direction increases a display area on a screen, and
the sixth step includes the seventh step of rotating the image so as to display the video in the first display direction on the basis of determination that the display area on the screen increases in the first display direction.

13. A method of switching a display direction of a portable electronic device which displays an image in a predetermined display direction, **characterized by** comprising:
the first step of detecting an aspect ratio of video obtained from a video stream supplied as the image; and
the second step of determining, on the basis of the aspect ratio of the video detected in the first step, which of the predetermined display direction of the video and a first display direction rotated through 90° from the predetermined display direction in a predetermined direction increases a display area on a screen,
the second step including the third step of rotating the image so as to display the video in the first display direction, on the basis of determination that the display area on the screen increases in the first display direction.

14. A recording medium which records a program for switching a display direction of a portable electronic device that displays an image in a predetermined display direction, **characterized in that** the recording medium records a program which causes a computer of the portable electronic device to execute
the first process of detecting a displacement of a housing (20) of the portable electronic device from a predetermined posture position by rotation;
the second process of determining a current posture position of the housing on the basis of the rotation displacement detected in the first process; and
the third process of rotating the image so as to display the image in a first display direction rotated through 90° from the predetermined display direction in a predetermined direction, on the basis of determination that the current posture position of the housing is a first posture position rotated through a predetermined angle from the predetermined posture position in the predetermined direction.

15. A medium according to claim 14, wherein the program further includes a program which causes the computer of the portable electronic device to execute the fourth process of rotating the image so as to display the image in a second display direction rotated through 90° from the predetermined display direction in a direction opposite to the first display direction, on the basis of determination that the current posture position of the housing is a second posture position rotated through a predetermined angle from the predetermined posture position in a direction opposite to the first posture position.

16. A medium according to claim 14, wherein the program further includes a program which causes the computer of the portable electronic device to execute
the fifth process of detecting an aspect ratio of video obtained from a video stream supplied as the image,
the sixth process of determining, on the basis of the aspect ratio of the video detected in the fifth process, which of the predetermined display direction of the video and the first display direction rotated through 90° from the predetermined display direction in the predetermined direction increases a display area on a screen, and
the seventh process of rotating the image so as to display the video in the first display direction on the basis of determination that the display area on the screen increases in the first display direction.

17. A recording medium which records a program for switching a display direction of a portable electronic device which displays an image in a predetermined display direction, **characterized in that** the recording medium records a program which causes a computer of the portable electronic device to execute
the first process of detecting an aspect ratio of video obtained from a video stream supplied as the image,
the second process of determining, on the basis of the aspect ratio of the video detected in the first step, which of the predetermined display direction of the video and a first display direction rotated through 90° from the predetermined display direction in a predetermined direction increases a display area on a screen, and
the third process of rotating the image so as to display the video in the first display direction, on the basis of determination that the display area on the screen increases in the first display direction.
